# EUROPEAN PATENT SPECIFICATION

(11) **EP 1 619 002 B1**
(45) Date of publication and mention of the grant of the patent: **21.11.2012**
(21) Application number: 04718609.3
(22) Date of filing: 09.03.2004
(51) Int. Cl.: B25J 5/00, A63H 17/00, B62D 61/00, B62D 61/10

(54) **Autonomous mobile structure on wheels**
Selbstfahrende Struktur auf Rädern
Structure mobile sur roues motorisée

(30) Priority: 11.03.2003 CN 03112949
(43) Date of publication of application: 25.01.2006
(73) Proprietor: Zhang, Zhouxin, Jiangyin, Jiangsu 214431 (CN)
(72) Inventor: Zhang, Zhouxin, Jiangyin, Jiangsu 214431 (CN)
(74) Representative: Grünecker, Kinkeldey, Stockmair & Schwanhäusser
(86) International application number: PCT/CN2004/000187
(87) International publication number: WO 2004/080664

(56) References cited:
- EP-A1- 0 362 159
- WO-A1-02/46031
- CN-Y- 2 239 897
- DE-A1-102006 002 601
- JP-A- 7 117 745
- JP-A- 59 038 176
- JP-A- 2002 120 502
- US-A- 3 738 284
- US-A- 4 644 876
- US-A- 5 374 879
- US-A- 5 857 534
- US-A- 6 123 600

## Description

### Field of the Invention

This invention relates to a mobile structure of an object. It is mainly utilized to move a robot or other objects that are driven electromechanically.

### Background of the Invention

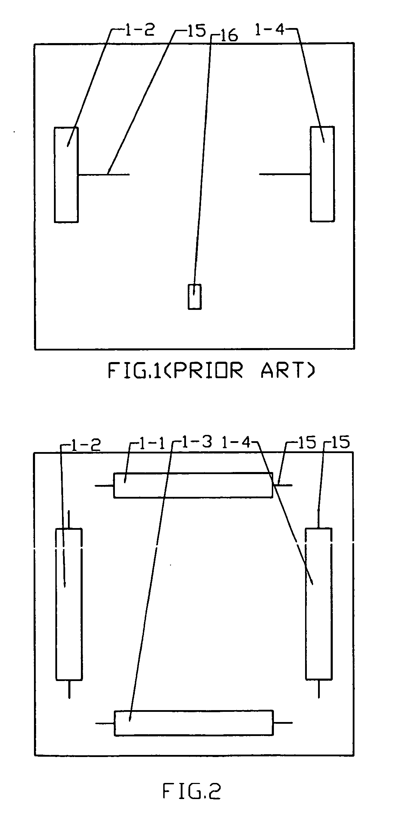

The conventional way to move an object with wheels on a flat surface is to install driving wheels on both the left and the right sides at the bottom of the object and with a supporting universal wheel located at the front end or rear end thereof. This structure is illustrated in Figure 1. If the two driving wheels move in the same direction, the object goes forward or backward. When one of the driving wheels moves and the other stays still, or the two wheels move in opposite directions, the object changes its direction, turning left or right by 90 degrees, then continues to go forward or backward. The result is that the object goes to the left or right. This type of movement has significant shortcomings, that is, it has to perform an extra action to turn while changing direction. Therefore, it is both time and energy consuming. When the object just starts to move, it can only move forward or backward, that means that the object has to travel through a distance, about 0.78 of the wheel interval. Where one wheel moves and the other stays still, the object also has to go forward or backward when it just starts to move. While the two wheels move in opposite directions, the object can be seen as staying still. This kind of moving structure is called a "two direction moving" structure. Most cars, toys or other objects moving on a flat surface can only do this kind of "two direction moving."

Reference JP 7117745 A relates to a travelling truck capable of rectangular travelling. The travelling truck comprises a moving structure with a first group of wheels and a second group of wheels, wherein the second group of wheels are orientated in a rectangular moving direction with respect to the first group of wheels. Once the first group of wheels is touching on ground, the second group of wheels is lifted in such a way that they do not touch the ground, and vice versa.

Reference JP 590 38 176 A discloses a truck structure which is capable of moving in a first and a second direction, wherein the first direction is perpendicular orientated to the second direction.

Reference US 3,738,284 A refers to a longitudinally and transversally moving truck which is provided with two sets of wheels for use in the two different travelling directions respectively, and discloses the features of the preamble of claim 1.

Reference WO 02/46031 A1 refers to a remote operated multidirectional transport vehicle. The transport vehicle comprises bidirectional wheels which support the transport vehicle to move in a forward and backward direction and also sideways. Each of the bidirectional wheels comprises a series of rollers rotatably disposed on a ring held securely with spokes attached to a hub in concert with other like rings and rollers. Such wheels, however, have a complicated expensive structure, require a lot of maintenance service and are not easy to replace. Further, it is likely that such wheels produce an increased noise while the vehicle is moving.

Reference JP 2002 120 502 A discloses a moving structure with bidirectional wheels as those similarly disclosed in reference WO 02/46031 A1.

Reference CN 2 239 897 Y discloses a polygonal wheel with an angular wheel, a compensating wheel for vertical and horizontal displacement, and a breaking and driving device.

Reference DE 10 2006 002 601 A1 describes an omni-directional wheel which comprises several circular wheels which are orientated in several moving directions.

It is the object of the present invention to provide an omni-directional mobile structure which can be produced in a simple and cost effective way, and which is easily controllable

This object can be solved with the technical features of claim 1. Improved embodiments can be achieved with the technical features of the dependent claims. **Summary of the Invention**

This invention overcomes the aforesaid limitations and provides a mobile structure that overcomes the aforesaid shortcomings of the "two-direction" moving structure. The new mobile structure can go forward, backward, leftward or rightward directly without changing the direction turning first, and hence. In this invention, we call this mobile structure can be called a "four-direction" moving structure.

The purpose of this invention may be achieved by design 2 described below. A mobile structure of an object consists of a chassis, a front driving wheel, a left driving wheel and auxiliary wheels, said front driving wheel is installed at the front most end of the chassis, the axle thereof is arranged laterally, said wheel can run forward or backward; said left driving wheel is installed at the far most left side of the chassis, the axle thereof is arranged longitudinally, said wheel can run leftward or rightward; auxiliary wheels are installed on the chassis.

The auxiliary wheels as described above comprise a rear wheel and a right wheel, said rear wheel is installed at the rear most end of the chassis, the axle thereof is arranged laterally, said wheel can run forward or backward; said right wheel is installed at the right most side of the chassis, the axle thereof is arranged longitudinally, said wheel can run leftward or rightward.

The rear wheel and the right wheel may also be driving wheels, said front driving wheel and rear driving wheel may be arranged parallelly on the chassis by a fixing support bracket and connected to the front wheel and rear wheel driving mechanism; said left driving wheel and right driving wheel may be arranged parallelly on the chassis by another fixing support bracket and connected to the left wheel and right wheel driving mechanism. The rear driving wheel runs synchronistically with the front driving wheel. The right driving wheel runs synchronistically with the left driving wheel.

According to a first design (design 1) the chassis comprises a fixed chassis and a rise and fall chassis. The fixing support bracket of the front wheel and rear wheel is installed on the fixed chassis, while the fixing support bracket of the left wheel and right wheel is installed on the rise and fall chassis. A rise and fall mechanism is installed on the fixed chassis, said up and down mechanism is comprised of a motor, a sensor switch or photoelectric switch, left and right worm axles, worms, internally threaded worm wheels, worm wheel limit device, a driving belt and two belt wheels. Said worms and belt wheels are installed on the two worm axles, said driving belt is installed on the two belt wheels. A screw bar is installed on the rise and fall chassis, said internally screwed worm wheel is placed on the screw bar, engaged with the worm and connected with the fixed chassis by a worm wheel limit device. Said sensor switch or photoelectric switch is installed at the lower part of the fixed chassis.

Said front wheel and rear wheel driving mechanism and the left wheel and right wheel driving mechanism comprise a motor, a driving gear, a driven belt gear, a driving belt and two belt wheels. The driving gear is installed on the axle of the motor. Said driven gear is engaged with the driving gear; and said driving belt is installed on the driven belt gear and the belt wheel. The front wheel and rear wheel driving mechanism is secured on the fixed chassis; and the left wheel and right wheel driving mechanism is secured on the rise and fall chassis.

The front wheel and rear wheel driving mechanism and the left wheel and right wheel driving system are individually connected to a changeover mechanism. Said changeover mechanism is connected with a driving mechanism. Said front wheel and rear wheel driving mechanism comprise a bevel gear, bevel belt gear, driving belt, belt wheel and a fixing support bracket. The bevel gear and the bevel belt gear are installed on the fixing support bracket and engaged with each other; the belt wheels are installed on the front driving wheel and the rear driving wheel, said driving belt is installed on the bevel belt gear and the belt wheel. The left wheel and right wheel driving mechanism comprises a belt gear, driving belt, belt wheel and a rise and fall support. Said belt gear is installed on the rise and fall support, and a belt wheel is installed on the left and right driving wheel. The driving belt is installed on the belt gear and belt wheel. Said changeover mechanism comprises a changeover gear and changeover arm; the changeover gear is installed at one end of the changeover arm; the other end of the changeover arm is hinged on the fixing support bracket; and the changeover arm is connected with the rise and fall support in the middle thereof by a position limit slot and a pin. Said driving mechanism comprises a motor, a driving gear and a driven gear. The driving gear is installed on the motor axle; and the driven gear is separately engaged with the driving gear and changeover gear. The front wheel and rear wheel driving mechanism, driving mechanism and the fixing support brackets are secured on the fixed chassis, yet the left wheel and right wheel driving mechanism, rise and fall support are secured on the rise and fall chassis.

According to the invention (design 2) the front, rear, left and right wheel can all be circular eccentric wheels or noncircular wheels. The front wheel and rear wheel driving mechanism and the left wheel and right wheel driving mechanism are all secured on the chassis and all comprise a motor, a driving gear, a driven belt gear, a driving belt and two belt wheels. The driving gear is installed on the axle of the motor; and said driven gear is engaged with the driving gear. The belt wheels are installed on the front and rear driving wheels and the left and right driving wheels; and said driving belt is installed on the driven belt gear and the belt wheel.

### Brief Description of the Drawings

Figure 1 illustrates a schematic diagram of arrangement of wheels of a conventional mobile structure.
Figure 2 illustrates the layout of the wheels of a mobile structure in this invention.
Figure 3 illustrates the design 1.
Figure 4 illustrates the running status of the left wheel and the right wheel of design 1 which are driven by only one motor.
Figure 5 illustrates the running status of the front wheel and the rear wheel of design 1 which are driven by only one motor.
Figure 6 illustrates the top view of Figure 4.
Figure 7 illustrates example 1 of Figure 6.
Figure 8 illustrates example 2 of Figure 6.
Figure 9 illustrates one position of the quadrangular wheels of design 2 in this invention.
Figure 10 illustrates another position of the quadrangular wheels of design 2 in this invention.
Figure 11 illustrates the driving status of design 2 in this invention.
Figure 12 illustrates the right side view of Figure 11.
Figure 13 illustrates the top view of Figure 11.
Figure 14 illustrates a variation of Figure 11.
Figure 15 illustrates the running status of the left wheel and the right wheel of design 2 which are driven by only one motor in this invention.
Figure 16 illustrates the running status of the front wheel and the rear wheel of design 2 which are driven by only one motor in this invention.
Figure 17 illustrates the "push mobile".
Figure 18 illustrates the "pull mobile".
Figure 19 illustrates the cross-sectional view of the wheel that is running whilst the axle is fixed.
Figure 20 illustrates the cross-sectional view of the wheel that is running with the axle thereof.
Figure 21 illustrates the cross-sectional view of the rise and fall supporting bar situation remedy device. (motor worm 37, worm wheel 38, running axle 39, spacer 41, supporting bar 42, rubber pad 43)
Figure 22 illustrates a remedy device for a one-wheel driving situation in this invention.
Figure 23 illustrates the cross-sectional view of a remedy device for a relay-driven plucking fork situation in this invention.

### Detailed Description of the preferred Embodiments

A mobile structure of an object comprise: the chassis 3, the front driving wheel 1-1, the left driving wheel 1-2 and the auxiliary wheels. Said front driving wheel 1-1 is installed at the front most end of the chassis 3; the axle thereof is arranged laterally, and said wheel can run forward or backward. Said left driving wheel 1-2 is installed at the left most side of the chassis 3; the axle thereof is arranged longitudinally; and said wheel can run leftward or rightward. The auxiliary wheels are installed on the chassis 3.

As illustrated in Figure 2, the auxiliary wheels comprise a rear wheel and a right wheel. Said rear wheel is installed at the rear most end of the chassis 3; the axle thereof is arranged laterally; and said wheel can run forward or backward. Said right wheel is installed at the right most side of the chassis 3; the axle thereof is arranged longitudinally; and said wheel can run leftward or rightward.

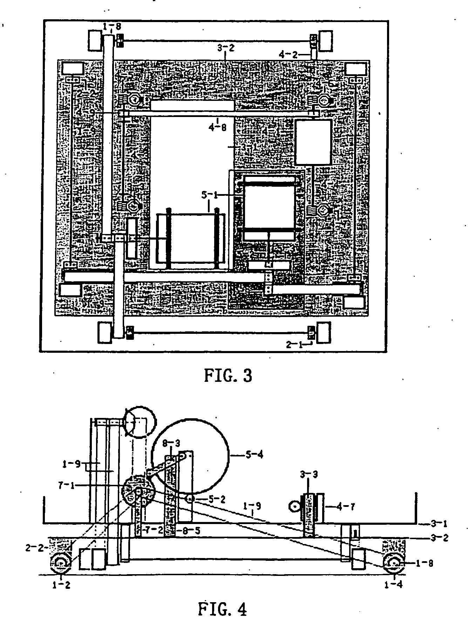

Design 1 is as below. As illustrated in Figures 3, 4, 5, 6, and 7, chassis 3 comprises of a fixed chassis 3-1 and a rise and fall chassis 3-2. The fixing support bracket 2-1 of the front wheel and rear wheel is installed on the fixed chassis 3-1, yet the fixing support bracket 2-2 of the left wheel and right wheel is installed on the rise and fall chassis 3-2. A rise and fall mechanism is installed on the fixed chassis 3-1. Said rise and fall mechanism is comprised of a motor 4-1, a sensor switch or photoelectric switch 4-2, left and right worm axle 4-3, 4-4, worms 4-5, internally threaded worm wheels 4-6, worm wheel limit device 4-7, a driving belt 4-8 and two belt wheels 4-9. Said worms 4-5 and belt wheels 4-9 are installed on the two worm axles 4-3, 4-4; and said driving belt 4-8 is installed on the two belt wheels 4-9 for driving the worms at the other side. A screw bar 3-3 is installed on the rise and fall chassis 3-2. Said internally screwed worm wheel 4-6 mates with the screw bar 3-3, and is engaged with the worm 4-5 and connected with the fixed chassis 3-1 by a worm wheel limit device 4-7. Said sensor switch or photoelectric switch 4-2 is installed at the lower part of the fixed chassis 3-1 to detect the position of the rise and fall chassis 3-2. The length of the contact spring is the sum of the distance that the rise and fall chassis 3-2 can travel and the thickness of the chassis 3-2, which means that the motor 4-1 will stop running just after the contact spring with curved edge releases.

As illustrated in Figure 3, the front wheel and rear wheel driving mechanism and the left wheel and right wheel driving mechanism all comprise a motor 5-1, a driving gear 5-2, a driven belt gear 5-3, a driving belt 1-9 and two belt wheels 1-8. The driving gear 5-2 is installed on the axle of the motor 5-1; said driven gear 5-3 is engaged with the driving gear 5-2; said driving belt 1-9 is installed on the driven belt gear 5-3 and the belt wheel 1-8; the front wheel and rear wheel driving mechanism are secured on the fixed chassis 3-1; and the left wheel and right wheel driving mechanism are secured on the rise and fall chassis 3-2.

As illustrated in Figures 4, 5 and 6, the front wheel and rear wheel driving mechanism and the left wheel and right wheel driving mechanism are individually connected to a changeover mechanism. Said changeover mechanism is connected with a driving mechanism. Said front wheel and rear wheel driving system comprise a bevel gear 6-1, bevel belt gear 6-2, driving belt 1-9, belt wheel 1-8 and a fixing support bracket 6-3. The bevel gear 6-1 and the bevel belt gear 6-2 are installed on the fixing support bracket 6-3 and are engaged with each other; the belt wheels 1-8 are installed on the front driving wheel 1-1 and the rear driving wheel 1-3; and said driving belt 1-9 is installed on the bevel belt gear 6-2 and the belt wheel 1-8. The left wheel and right wheel driving mechanism comprise a belt gear 7-1, belt wheels 1-8, driving belt 1-9 and a rise and fall support 7-2. Said belt gear 7-1 is installed on the rise and fall support 7-2; said belt wheels 1-8 are installed on the left driving wheel 1-2 and the right driving wheel 1-4; and the driving belt 1-9 is installed on the belt gear 7-1 and belt wheels 1-8. Said changeover mechanism comprises a changeover gear 8-1 and changeover arm 8-2. The changeover gear 8-1 is installed at one end of the changeover arm 8-2; the other end of the changeover arm 8-2 is hinged on the fixing support bracket 8-6; and the changeover arm 8-2 is connected with the rise and fall support 8-5 in the middle thereof by a position limit slot 8-3 and a pin 8-4. Said driving mechanism comprises a motor 5-1, a driving gear 5-2 and a driven gear 5-4.

The driving gear 5-2 is installed on the axle of the motor 5-1; and the driven gear 5-4 is separately engaged with the driving gear 5-2 and changeover gear 8-1. The front wheel and rear wheel driving mechanism, driving mechanism and the fixing support bracket 6-3 and the fixing support bracket 8-6 are secured on the fixed chassis 3-1, yet the left wheel and right wheel driving mechanism, rise and fall support 7-2 and rise and fall support 8-5 are secured on the rise and fall chassis 3-2.

Motor 4-1 drives the worms 4-5 to change the height of the left wheel 1-2 and right wheel 1-4 from the ground. Motor 4-1 drives all of the worms 4-5 and worm wheels 4-6 through the driving belt 4-8 and the two belt wheels 4-9, resulting in the rising and falling of the screw bar 3-3. The rise and fall chassis 3-2 is elevated or pulled down and resulting in the rising and falling of the changeover arm 8-2, changeover gear 8-1, belt gear 7-1, the left wheel 1-2 and the right wheel 1-4. When the left wheel 1-2 and the right wheel 1-4 are at its lowest position, the contact spring of the sensor switch 4-2 release; motor 4-1 stops running; motor 5-1 starts to run and drive the left wheel 1-2 and the right wheel 1-4 through the driving gear 5-2, driven gear 5-4, changeover gear 8-1, belt gear 7-1, driving belt 1-9 and the belt wheels 1-8; and the walking structure therefore moves leftward or rightward. When the walking structure needs to move forward or backward, motor 5-1 stops running; motor 4-1 starts to run; the distance between the rise and fall chassis 3-2 and ground surface so changes; and the contact spring of the sensor switch 4-2 is compressed. When the contact spring of the sensor switch 4-2 is released again, the rise and fall chassis is at its highest position. Motor 4-1 stops running; motor 5-1 starts to run and drive the front wheel 1-1 and the rear wheel 1-3 through the driving gear 5-2, driven gear 5-4, changeover gear 8-1, bevel gear 6-1, bevel belt gear 6-2, driving belt 1-9 and the belt wheels 1-8 and the walking structure so moves forward or backward. The disadvantage of this design is that it is time-consuming when the wheels are elevated or pulled down. However, the time consumed in this design is less than that of the conventional structure illustrated in Figure 1.

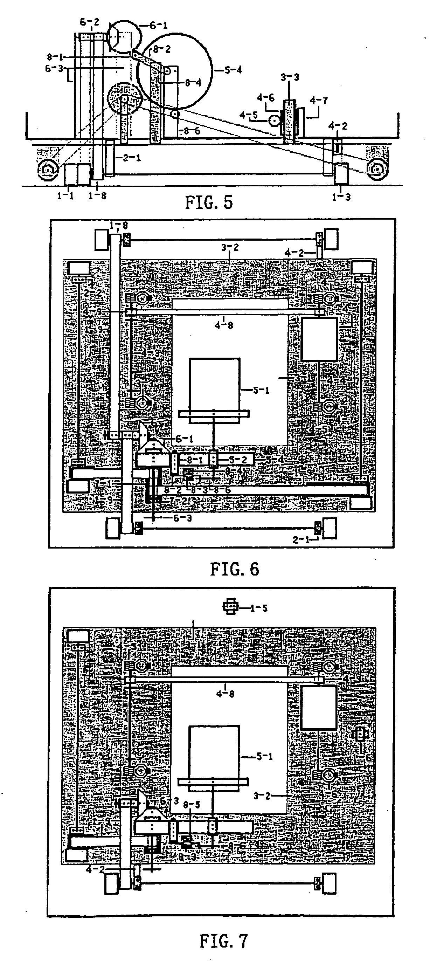

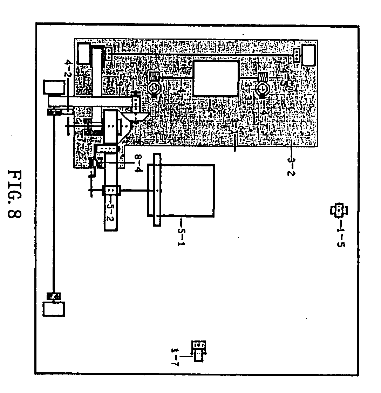

The design described as above may be simplified under some circumstances, such as, only using the front wheel 1-1 or the left wheel 1-2 as the driving wheel. The rear wheel 1-5 and the right wheel 1-6 serve as supporting wheels. They are separately secured on the fixed chassis 3-1 and the rise and fall chassis 3-2, as illustrated in Figure 7; or the rear wheel 1-5, as a supporting wheel, is secured on the fixed chassis 3-1, and the right wheel 1-7, as a universal wheel, is also secured on the fixed chassis 3-1, as shown in Figure 8. One universal wheel may even be applied to replace the rear wheel and the right wheel and secured on the off hind part of the fixed chassis 3-1.

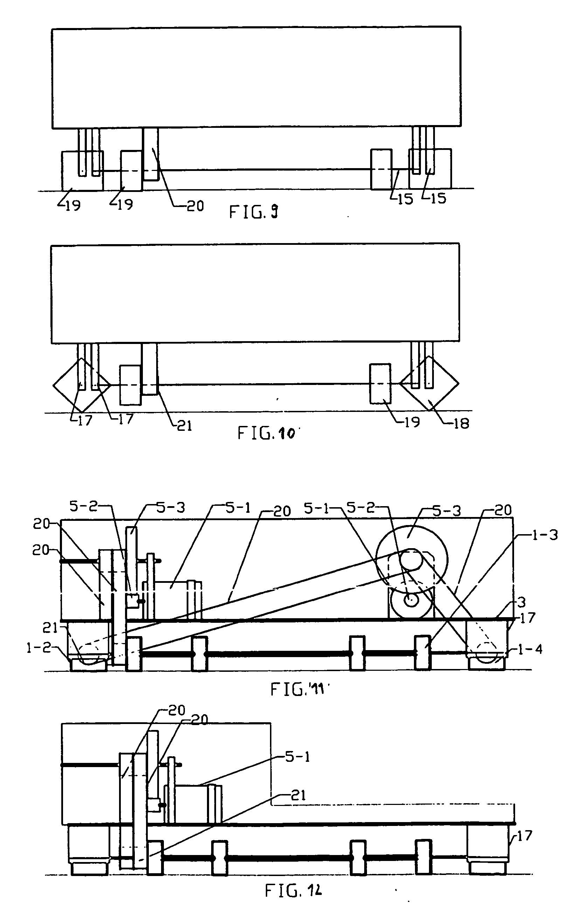

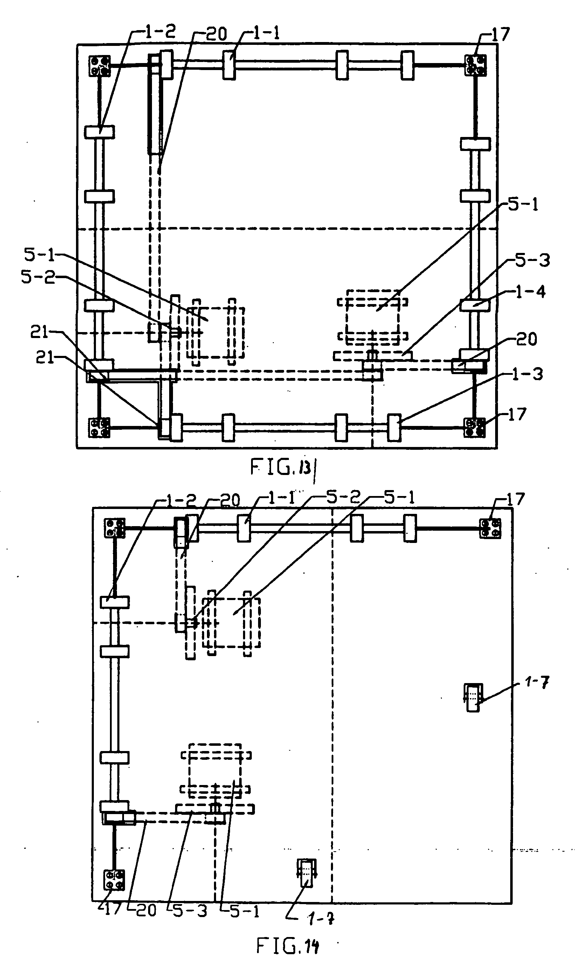

The embodiment of this invention (design 2) is to replace the conventional circular wheels by eccentric, elliptic, polygonal, curved, star-shaped or other regular and irregular shaped noncircular wheels. Take quadrangular wheel as an example, as illustrated in Figures 11, 12, and 13. The driving mechanism is comprised of two motors 5-1, driving gear 5-2, driven belt gear 5-3, driving belt 20 and belt wheels 21. The driving gear 5-2 is installed on the axle of the motor 5-1: said driven gear 5-3 is engaged with the driving gear 5-2; the belt wheels 21 is installed on the front wheel 1-1, rear wheel 1-3, the left wheel 1-2 and the right wheel 1-4; and said driving belt 20 is installed on the driven belt gear 5-3 and the belt wheel 21. Motor 5-1 drives the driving wheel 5-2, and the driving wheel 5-2 then drives the driven wheel 5-3 which then drives the wheels through driving belt 20 and belt wheel 21. When the mobile structure stays still, due to the inertia effect, the wheels stand on one of the edges of the quadrangle, and it is the lowest position as shown in Figure 9. When one group of wheels start to run, the whole mobile structure is elevated from the ground, the other group of wheels is also elevated from the ground, but can not run by the gravity only because it is pulled by the driving belt, as illustrated in Figure 10. When the running wheels pass their highest position, the mobile structure returns to its lowest position, another edge of the quadrangle by the gravity. Operating in this manner, the two motors run taking a turn, e.g. when one motor is running, the other is not running. Furthermore, the wheels may rotate in opposite directions. Therefore, the mobile structure can run a straight line motion facing front, rear, left and right at all times without first changing its direction and distance from the surface. Since each step taken by the mobile structure only travels a fixed distance, such as an edge of a polygon or half perimeter of an ellipse or a whole circle of an eccentric circle, a conventional direct current motor may be used to replace the expensive stepper motor. A stepper motors may be used as well. Similar to the design one, the front wheel and the left wheel may only be used as the driving wheels, while the rear wheel and right wheel may be conventional universal wheels, as illustrated in Figure 14. One universal wheel may even be used to replace the rear wheel and the right wheel in this embodiment.

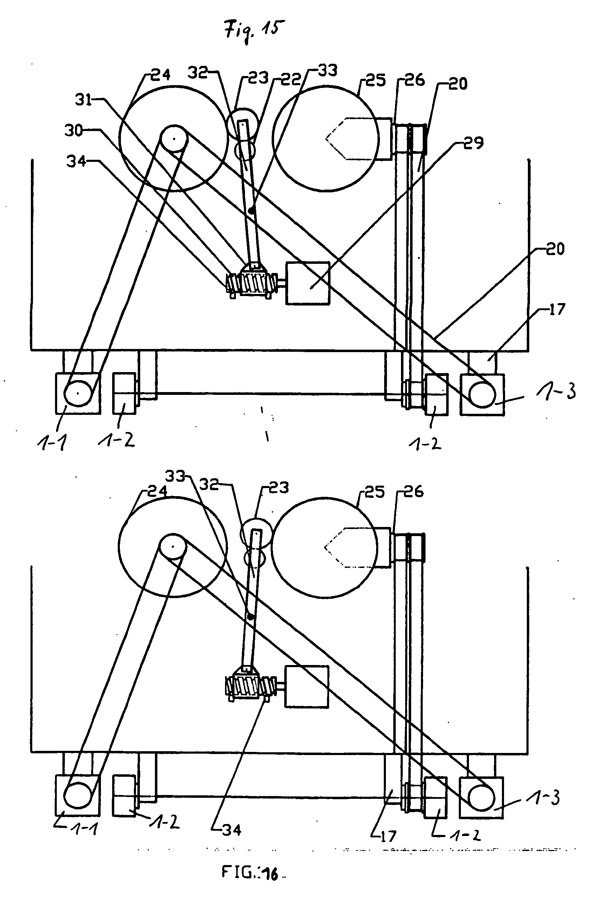

As illustrated in Figures 15 and 16, where a worm and a changeover gear driven by a magnetic valve or a small motor are used, and only one motor is needed to drive the two groups of wheels 1-1,1-2,1-3,1-4. Worm 30 is installed on the axle of motor 29, and nut 31 is mated with the worm 30. One end of the changeover arm 32 is hinged on the nut 31, while the other end of the changeover arm is connected with the changeover gear 23. The sliding groove in the middle thereof is positioned through a locking axle 33. The driving gear 22 is secured on the mobile motor. When the small motor 29 pulls the nut 31 engaged with worm 30 near to itself, the changeover gear 23 that is secured on the other end of the changeover arm is pushed to the belt gear 24 of the left wheel and the right wheel. Under the driving of the driving gear 22, the left wheel and the right wheel start running through the belt gear 24 and the driving 'belt 20, as illustrated in Figure 15. When the front wheel and the rear wheel need to run, the small motor 29 rotates in the opposite direction quickly, pushes the changeover arm 32 away from the motor 29, pulls the changeover gear 23 to the side of bevel gear 25, drives the driving gear 22 through the changeover gear 23 and bevel gear 25, drives the bevel belt gear 26 on the perpendicular direction and finally drives the front wheel and the rear wheel through the driving belt 20, as illustrated in Figure 16. Small motor 29 may be a mini stepper motor, or a mini direct current motor. A sensor switch or a photoelectric switch 34 shall be installed on both sides of the nut 31 to control the motor 29 to stop at an appropriate time.

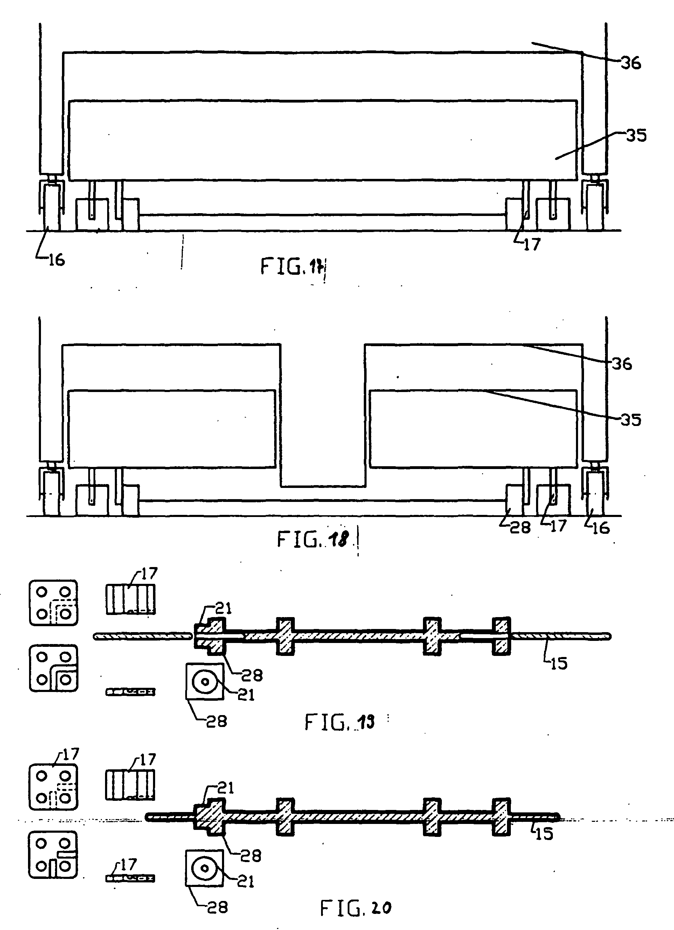

One disadvantage of the above-described design 2 is that the object may vibrate while moving, so some anti-vibration devices may be used to mitigate the vibration. The object may also be separated into two parts, e.g. the main body of the object 36 is one part, and the mobile structure 35 the other part separated from the main body. The middle of the bottom of the object is void. Three or four universal wheels 16 are arranged on the four edges to support the main body of the object. The mobile structure is located in the middle of the bottom of the object and is just away from the main body thereof. The mobile structure does not contact the main body at its highest position. It pushes or pulls the main body to walk in the four directions. If the main body first contacts the edge of the mobile structure, as illustrated in Figure 17, it is a "push." If it first contacts the middle part of the mobile structure, as illustrated in Figure 18, it is a "pull." Such arrangement is of the advantage that it is not necessary for the mobile structure to raise the whole object, but only to raise the mobile structure itself. Since a lower output power is used to move the object, the object will not vibrate. This arrangement may also be applied in design 1.

Moreover, the driving wheel described in this invention refers to the running wheels 28 which are driven by a motor or an engine through gears, worms, chains, belts, pulleys, friction wheels etc. The synchronous belt driving described in this invention means that the axle of the wheel and the wheel may be fixed to each other, they run together on the wheel axle support, as illustrated in Figure 20. Or one end of the axle of the wheel is secured by the wheel axle support, and the other end is inserted into the wheel, therefore, the axle stays still while the wheel is running, as illustrated in Figure 19. Figures 19 and 20 use a quadrangular wheel as an example. The wheel can be one (Figure 2), or two wheels (Figures 3, 6 and 9), or several wheels arranged on the same axle (Figure 11 and 19). The wheels that run in the same direction are in the same group, e.g. the front wheel and the rear wheel is one group, the left wheel and the right wheel is another group. Any group of wheels shall be able to keep the whole object stable when they are grounded. If the rear wheel and the right wheel are replaced by one universal wheel, the whole object shall also be kept stable when the front wheel and the universal wheel are running or the left wheel and the universal wheel are running. For the purpose of simplification, one level of shift gear is utilized in this invention, namely only with one driven belt gear 5-3. Multi-level shift gears may be used if necessary.

In addition, the direction referred to in this invention is relative, which means the front may be the initial direction of object, or the direction after 90 , 180 or 270 turn.

One problem may exist when the mobile structure is put into practice, namely it may not walk a straight line due to processing technology and non-flat ground surface. Even though the position may be remedied by some sensors, or mechanisms on the structure itself, or be remedied via colliding with a fixed object, the position remedy itself is certainly important. Some means for position remedy are described as below.

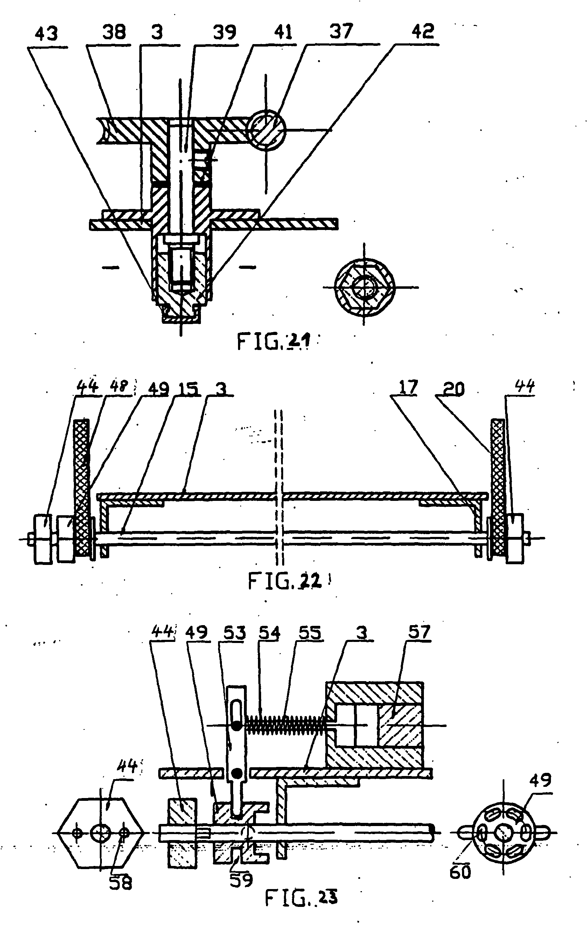

One or several of the wheels or the wheel axle support may be designed so that it (they) can be elevated or lowered. Or, a separate conventional wheel or universal wheel on the chassis or the wheel axle support is designed so that it can be elevated or lowered. By raising and lowering, the mobile structure is tilted at the direction that is perpendicular to the moving direction, and so leads the direction change while moving, e.g. tilting to one direction while going forward but tilting to another direction while going backward. Or, a pin lift 42 located on the chassis or the wheel axle support may also be utilized in this invention. The bottom of the pin lift 42 is a kind of material of large friction efficiency, such as rubber, as illustrated in Figure 21. When the bottom of the pin lift 42 stands on the ground while the wheels are running, the mobile structure will rotate around the pin lift 42 due to the large friction at the bottom thereof. Therefore, the direction of the mobile structure will so be changed. Or, one wheel or several wheels or the wheel axle support of the mobile structure may also be designed so that it (they) can be pushed forward or backward, causing the initially parallel wheel axles (front and back or left and right) to become unparallel, and resulting in a change in the moving direction of the wheels. All the structures described above may be carried out through the means of a lever, compressed air, hydraulic, worm, or cam, etc. With regard to design 1, the rise and fall mechanism contained therein may be used to elevate or lower the separate wheel or pin lift by the means of lever.

Yet there is another example for position remedy. One or two wheels on any side (front, rear, left, right) that is secured to the mobile structure may be driven by a separate driving system, while another separate driving system for the wheels on the other side. Difference driving or different direction driving is used to change the moving direction of the mobile structure. However, this kind of design is complicated, and the coordination of the wheels while running to the same direction is not very good. As an improvement, an eccentric or noncircular position-remedy wheel 49 (in the following wheel 49) may be added on one side of the wheel axle of this "four direction moving" structure. The wheel 49 is not directly secured on the wheel axle, which means when the wheels of the mobile structure are running, the wheel 49 stays still, it only runs when position-remedy becomes necessary. Said wheel 49 is positioned by a locating stud only and driven by a separate driving system 48, as illustrated in Figure 22. Or, said wheel 49 may slide along the wheel axle; it is plucked by a plucking fork 53 that is driven by a set of drawbars 55; and the drawbars 55 are driven by a relay 57 or a motor. A ring slot 59 is designed in the middle of the external surface of said wheel 49, and a plucking fork 53 is inserted in the slot. When the relay 57 or motor is running, said wheel 49 is plucked to the adjacent wheel 44 by the plucking fork 53 and is engaged with the driving wheel and starts running along with it. These two wheels are just next to each other; on one side of one wheel, a curved slot 60 is designed; and on the corresponding side of another wheel there are heaves 58 that match the slots. Since the major axle of said position-remedy wheel 49 is longer than that of the running wheel 44, the mobile structure will tilt when the position-remedy wheel 49 lies on the ground, the direction so changes. After the position-remedy is over, the motor or the relay 57 is reset. Said relay 57 is reset via the spring 54 installed on the drawbar 55. Then the position-remedy wheel 49 is pulled away from the running wheel, and the mobile structure returns to normal moving. Such position-remedy wheel 49 shall be designed so that it is heavier at the short axle and lighter at the major axle to ensure the major axle will not lie on the ground due to gravity when the mobile structure moves normally, as illustrated in Figure 23.

Some means of reducing deviation may be applied in this invention, such as increasing the friction of the wheels by covering all the wheels with rubber, keeping the axles of the wheels at the same direction parallel to each other as much as possible (except when position-remedy is necessary), improving processing technology, or arranging some locating pins or locating holes, keeping the same external diameter of the wheels at the same direction, and installing the mobile structure on as flat a surface as possible. To avoid the deformation of the chassis, the reinforcing rib may be arranged at the position where the wheel axles supports are installed, the wheel axles shall be of high strength to avoid deformation, the center of gravity shall be at the central position of the wheels which are loaded. When batteries are needed, adjust their positions and secure them.

To detect the deviation of the mobile structure, the photo detection chips and the accessories of a photoelectric mouse as known can be used. Four sets of such chips and accessories can be installed at the corners or the central part of the bottom frame of the main body of universal wheel robots moved by the mobile structure in this invention. Such chips and accessories shall be arranged in a symmetric manner. To install plural sets of such chips and accessories is based on consideration that the ground is not so flat. As to all kinds of the universal wheels applied in this invention, such as eccentric universal wheel, when the mobile structure goes from forward or backward to leftward or rightward, very big resistance is involved, also considering inertia, it may be better to load some weight, such as batteries, on the mobile structure. In addition, auxiliary running mechanism, such as bearings or balls, may be installed on the direction change axle of the universal wheels. Or, the universal wheel may be designed as a sphere universal wheel, and it lies on the ground and runs like a ball.

The mobile structure of the present invention is a new omni directional mobile structure. Compared with the prior art, the mobile structure of the present invention is simple, cost effective, and can move step by step.

## Claims

1. A mobile structure of an object comprising: a chassis (3), a front driving wheel (1-1), a left driving wheel (1-2) and at least one auxiliary wheel, wherein said front driving wheel (1-1) is installed at the front most end of the chassis (3) and the axle thereof is arranged laterally; said left driving wheel (1-2) is installed at the left most end of the chassis (3) and the axle thereof is arranged longitudinally; said at least one auxiliary wheel (1-3,1-4,1-7) is installed on the chassis (3); said driving wheels are driven by a driving mechanism,
**characterized in that**
the front driving wheel (1-1) and said left driving wheel (1-2) are eccentric circular wheels or noncircular wheels.

2. The mobile structure of an object of claim 1, wherein said at least one auxiliary wheel comprises a rear wheel (1-3) and a right wheel (1-4), said rear wheel (1-3) is installed at the rear most end of the chassis (3), and the axle thereof is arranged laterally; said right wheel (1-4) is installed at the right most side of the chassis (3), and the axle thereof is arranged longitudinally.

3. The mobile structure of an object of claim 2, wherein the rear wheel (1-3) and the right wheel (1-4) are also driving wheels, said front driving wheel (1-1) and rear driving wheel (1-3) are arranged parallelly on the chassis (3) and connected to a front wheel and rear wheel driving mechanism; said left driving wheel (1-2) and right driving wheel (1-4) are arranged parallelly on the chassis (3) and connected to a left wheel and right wheel driving mechanism, the rear driving wheel (1-3) runs synchronistically with the front driving wheel (1-1); the right driving wheel (1-4) runs synchronistically with the left driving wheel (1-2).

4. The mobile structure of an object of claim 3, wherein the rear driving wheel (1-3) and the right driving wheel (1-4) are eccentric circular wheels or noncircular wheels; said front wheel and rear wheel driving mechanism and the left wheel and right wheel driving mechanism are all secured on the chassis (3) and all comprise a motor (5-1), a driving gear (5-2), a driven belt gear (5-3), a driving belt (20) and two belt wheels (21); the driving gear (5-2) is installed on the axle of the motor (5-1); said driven gear (5-3) is engaged with the driving gear (5-2); the belt wheels (21) are installed on the front driving wheel (1-1) and rear driving wheel (1-3) and the left driving wheel (1-2) and right driving wheel (1-4); said driving belt (20) is installed on the driven belt gear (5-3) and the belt wheel (21).

5. The mobile structure of an object of claim 1, wherein the auxiliary wheels are universal wheels (1-7) and secured on the rear part of the chassis (3).

## Patentansprüche

1. Mobile Struktur eines Objektes, die umfasst:
eine Chassis (3), ein vorderes Antriebsrad (1-1), ein linkes Antriebsrad (1-2) und wenigstens ein Zusatzrad, wobei das vordere Antriebsrad (1-1) an dem vordersten Ende des Chassis (3) installiert ist und seine Achse quer angeordnet ist, das linke Antriebsrad (1-2) am am weitesten links befindlichen Ende des Chassis (3) installiert ist und seine Achse in Längsrichtung angeordnet ist, das wenigstens eine Zusatzrad (1-3, 1-4, 1-7) an dem Chassis (3) installiert ist und die Antriebsräder von einem Antriebsmechanismus angetrieben werden;
**dadurch gekennzeichnet, dass**
das vordere Antriebsrad (1-1) und das linke Antriebsrad (1-2) exzentrisch kreisförmige Räder oder nicht kreisförmige Räder sind.

2. Mobile Struktur eines Objektes nach Anspruch 1, wobei das wenigstens eine Zusatzrad ein hinteres Rad (1-3) sowie ein rechtes Rad (1-4) umfasst, das hintere Rad (1-3) am hintersten Ende des Chassis (3) installiert ist und seine Achse quer angeordnet ist, und das rechte Rad (1-4) an der am weitesten rechts befindlichen Seite des Chassis (3) installiert ist und seine Achse in Längsrichtung angeordnet ist.

3. Mobile Struktur eines Objektes nach Anspruch 2, wobei das hintere Rad (1-3) und das rechte Rad (1-4) ebenfalls Antriebsräder sind, das vordere Antriebsrad (1-1) sowie das hintere Antriebsrad (1-3) parallel an dem Chassis (3) angeordnet und mit einem Antriebsmechanismus des vorderen Rades und des hinteren Rades verbunden sind, das linke Antriebsrad (1-2) sowie das rechte Antriebsrad (1-4) parallel an dem Chassis (3) angeordnet und mit einem Antriebsmechanismus des linken Rades und des rechten Rades verbunden sind, das hintere Antriebsrad (1-3) synchron mit dem vorderen Antriebsrad (1-1) läuft und das rechte Antriebsrad (1-4) synchron mit dem linken Antriebsrad (1-2) läuft.

4. Mobile Struktur eines Objektes nach Anspruch 3, wobei das hintere Antriebsrad (1-3) und das rechte Antriebsrad (1-4) exzentrische kreisförmige Räder oder nicht kreisförmige Räder sind; der Antriebsmechanismus des vorderen Rades und des hinteren Rades sowie der Antriebsmechanismus des linken Rades und des rechten Rades sämtlich an dem Chassis (3) befestigt sind und alle einen Motor (5-1), ein antreibendes Zahnrad (5-2), ein angetriebenes Riemenzahnrad (5-3), einen Antriebsriemen (20) sowie zwei Riemenräder (21) umfassen, wobei das antreibende Zahnrad (5-2) an der Achse des Motors (5-1) installiert ist, das angetriebene Zahnrad (5-3) mit dem antreibenden Zahnrad (5-2) in Eingriff ist, die Riemenräder (21) an dem vorderen Antriebsrad (1-1), dem hinteren Antriebsrad (1-3), dem linken Antriebsrad (1-2) sowie dem rechten Antriebsrad (1-4) installiert sind und der Antriebsriemen (20) an dem angetriebenen Riemenzahnrad (5-3) und dem Riemenrad (21) installiert ist.

5. Mobile Struktur eines Objektes nach Anspruch 1, wobei die Zusatzräder universale Räder (1-7) sind und am hinteren Teil des Chassis (3) befestigt sind.

## Revendications

1. Structure mobile d'un objet comprenant un châssis (3) une roue motrice avant (1-1), une roue motrice gauche (1-2) et au moins une roue auxiliaire, dans laquelle ladite roue motrice avant (1-1) est installée à l'extrémité la plus en avant du châssis (3) et son essieu est agencé latéralement ; ladite roue motrice gauche (1-2) est installée à l'extrémité la plus à gauche du châssis (3) et son essieu est agencé longitudinalement ; ladite au moins une roue auxiliaire (1-3, 1-4, 1-7) est installée sur le châssis (3) ; lesdites roues motrices sont entraînées par un mécanisme d'entraînement,
**caractérisée en ce que**
la roue motrice avant (1-1) et ladite roue motrice gauche (1-2) sont des roues circulaires excentrées ou des roues non circulaires.

2. Structure mobile d'un objet selon la revendication 1, dans laquelle ladite au moins une roue auxiliaire comprend une roue arrière (1-3) et une roue droite (1-4), ladite roue arrière (1-3) est installée à l'extrémité la plus en arrière du châssis (3) et son essieu est agencé latéralement ; ladite roue droite (1-4) est installée du côté le plus à droite du châssis (3) et son essieu est agencé longitudinalement.

3. Structure mobile d'un objet selon la revendication 2, dans laquelle la roue arrière (1-3) et la roue droite (1-4) sont également des roues motrices, lesdites roue motrice avant (1-1) et roue motrice arrière (1-3) sont agencées parallèlement sur le châssis (3) et sont reliées à un mécanisme d'entraînement de roue avant et de roue arrière ; lesdites roue motrice gauche (1-2) et roue motrice droite (1-4) sont agencées parallèlement sur le châssis (3) et sont reliées à un mécanisme d'entraînement de roue gauche et de roue droite, la roue motrice arrière (1-3) tourne en synchronisme avec la roue motrice avant (1-1) ; la roue motrice droite (1-4) tourne en synchronisme avec la roue motrice gauche (1-2).

4. Structure mobile d'un objet selon la revendication 3, dans laquelle la roue motrice arrière (1-3) et la roue motrice droite (1-4) sont des roues circulaires excentrées ou des roues non circulaires ; lesdits mécanisme d'entraînement de roue avant et de roue arrière et mécanisme d'entraînement de roue gauche et de roue droite sont tous fixés sur le châssis (3) et comprennent tous un moteur (5-1), un engrenage d'entraînement (5-2), un engrenage entraîné par une courroie (5-3), une courroie d'entraînement (20) et deux roues de courroie (21) ; l'engrenage d'entraînement (5-2) est installé sur l'essieu du moteur (5-) ; ledit engrenage entraîné (5-3) est en prise avec l'engrenage d'entraînement (5-2) ; les roues de courroie (21) sont installées sur la roue motrice avant (1-1) et la roue motrice arrière (1-3) et la roue motrice gauche (1-2) et la roue motrice droite (1-4) ; ladite courroie d'entraînement (20) est installée sur l'engrenage entraîné par une courroie (5-3) et la roue de courroie (21).

5. Structure mobile d'un objet selon la revendication 1, dans laquelle les roues auxiliaires sont des roues universelles (1-7) et sont fixées sur la partie arrière du châssis (3).
